# EUROPÄISCHE PATENTSCHRIFT

(11) **EP 3 405 750 B1**
(45) Veröffentlichungstag und Bekanntmachung des Hinweises auf die Patenterteilung: **16.03.2022**
(21) Anmeldenummer: 17700286.2
(22) Anmeldetag: 12.01.2017
(51) Int. Cl.: G01C 21/36

(54) **VERFAHREN ZUR ANORDNUNG UND ANZEIGE GRAFISCHER ELEMENTE EINER DARSTELLUNG EINES FAHRZEUGNAVIGATIONSSYSTEM**
METHOD OF ARRANGING AND DISPLAYING GRAPHIC ELEMENTS OF A DEPICTION IN A VEHICLE NAVIGATION SYSTEM
PROCÉDÉ POUR ARRANGER ET AFFICHER DES ÉLÉMENT GRAPHIQUES D'UN AFFICHAGE DANS UN SYSTÈME DE NAVIGATION DE VÉHICULE

(30) Priorität: 19.01.2016 DE 102016200608
(43) Veröffentlichungstag der Anmeldung: 28.11.2018
(73) Patentinhaber: Bayerische Motoren Werke Aktiengesellschaft, 80809 München (DE)
(72) Erfinder: STAHL, Hans-Ulrich, 80807 Muenchen (DE)
(86) Internationale Anmeldenummer: PCT/EP2017/050540
(87) Internationale Veröffentlichungsnummer: WO 2017/125305

(56) Entgegenhaltungen:
- EP-A1- 2 916 315
- WO-A2-2006/108617
- US-A1- 2013 124 082
- US-A1- 2015 276 423

## Beschreibung

Die vorliegende Erfindung betrifft ein Verfahren zur Anordnung und Anzeige grafischer Elemente einer Darstellung eines Fahrzeugnavigationssystems. Die Erfindung betrifft ferner ein Fahrzeugnavigationssystem und ein Fahrzeug, insbesondere ein Kraftfahrzeug.

Die Anzeigeflächen von Fahrzeugnavigationssystemen moderner Kraftfahrzeuge können für eine Vielzahl von Darstellungen verwendet werden. Neben zweidimensionalen Kartendarstellungen der Umgebung des Kraftfahrzeugs können beispielsweise realitätsnahe dreidimensionale perspektivische Darstellungen der Umgebung des Kraftfahrzeugs angezeigt werden. In solchen zwei- oder dreidimensionalen Karten- und / oder Umgebungsdarstellungen kann auch die bisher gefahrene und / oder planmäßig vorausliegende Fahrtroute eingezeichnet werden. Zusätzlich werden häufig weitere Informationen auf der Anzeigefläche dargestellt. Dabei kann es sich um die Navigation betreffende Informationen wie beispielsweise die Zieladresse, die voraussichtliche Ankunftszeit, die verbleibende Fahrzeit, POIs (points of interest) etc. handeln. Ferner kann es sich um Informationen handeln, die nicht die Navigation betreffen. Beispielsweise kann die Anzeigefläche eines Fahrzeugnavigationssystems genutzt werden, um Informationen zu dem gegenwärtig empfangenen Radiosender anzuzeigen.

Dem Fahrer eines modernen Kraftfahrzeugs soll also eine Vielzahl von Informationen angezeigt werden. Der zur Anzeige dieser Informationen benötigte Platzbedarf kann die Größe der Anzeigefläche des Fahrzeugnavigationssystems überschreiten. Die angezeigten grafischen Elemente können sich in diesem Fall teilweise überlappen, so dass nicht jede der Informationen zu jedem Zeitpunkt ablesbar ist. Die Darstellung der Informationen soll jedoch stets so erfolgen, dass der Fahrer sie möglichst mühelos erfassen kann, um seine Aufmerksamkeit nicht vom Verkehrsgeschehen abzulenken.

DE 103 13 743 A1 betrifft ein Verfahren und eine Vorrichtung zur Darstellung von Fahrerinformationen. Dabei ist die Ausgabe von Zielführungs-Anzeigeobjekten und Informationsobjekten vorgesehen. Die angezeigten Objekte können durch Entfernen von Teilbereichen beschnitten werden, um teilweise Verdeckungen durch Verdeckungsobjekte zu berücksichtigen.

DE 10 2011 015 216 A1 betrifft eine Visualisierung von Adresspunkten auf Karten. Die Adresspunkte können als Symbole dargestellt werden. Um eine völlige Verdeckung eventuell interessanter Details durch die Symbole zu verhindern, können diese semitransparent dargestellt werden.

DE 10 2007 030 229 A1 lehrt ein Verfahren zur verdeckungsarmen Darstellung dicht benachbarter topografischer Objekte in stilisierter Form. Dabei wird eine Verdeckung topografischer Elemente einer Karte durch Objekte vermieden durch eine zeitliche und / oder räumliche Darstellung der Objekte und / oder eine Darstellung der Objekte in einem Popupfenster und / oder durch eine Änderung des Kartenmaßstabs.

WO 2006/108617 A2 lehrt ein Verfahren zur Darstellung von Informationen in einem Verkehrsmittel. In einem frei programmierbaren Kombiinstrument kann dabei eine Animation vorgesehen werden, bei der eine Kartendarstellung überdeckende Rundinstrumente verkleinert und zur Seite verschoben werden, sodass ein größerer Teil des angezeigten Kartenausschnitts gezeigt wird.

EP 2 916 315,

US 2015/0276423 A1 und US 2013/0124082 A1 offenbaren weitere Beispiele für eine gleichzeitige Darstellung von Karteninformationen und Zusatzinformationen auf einer gemeinsamen Anzeigefläche.

Es stellt sich die Aufgabe, die Darstellung eines Fahrzeugnavigationssystems derart zu verbessern, dass die vom Fahrer unmittelbar erfassbare Menge an Informationen erhöht wird.

Die Aufgabe wird gelöst bei einem Verfahren, einem Fahrzeugnavigationssystem und einem Fahrzeug mit den Merkmalen der unabhängigen Ansprüche. Vorteilhafte Weiterbildungen der Erfindung sind Gegenstände der abhängigen Ansprüche.

Die Erfindung wird gebildet durch ein erstes Verfahren zur Anordnung und Anzeige grafischer Elemente einer Darstellung eines Fahrzeugnavigationssystems innerhalb einer Anzeigefläche, wobei die grafischen Elemente zumindest ein geografisches Element und ein nichtgeografisches Element umfassen. In einem ersten Verfahrensschritt wird das zumindest eine geografische Element innerhalb der Anzeigefläche angeordnet und angezeigt. In einem zweiten Schritt wird das zumindest eine nichtgeografische Element innerhalb der Anzeigefläche angeordnet und angezeigt. Dies erfolgt erfindungsgemäß derart, dass die Überdeckung des zumindest einen geografischen Elements durch das zumindest eine nichtgeografische Element minimiert und insbesondere vollständig vermieden wird.

Geografische Elemente sind insbesondere Elemente einer Kartendarstellung des Navigationssystems wie beispielsweise Straßen, Fahrtrouten, Bezeichner (z.B. Ortsnamen, Straßennamen, Objektnamen, Piktogramme) oder Objektdarstellungen (z.B. Darstellungen von Häusern, Brücken, etc.). Nichtgeografische Elemente sind insbesondere Elemente, die nicht Teile der Kartendarstellung des Navigationssystems sind. Insbesondere können nichtgeografische Elemente sogenannte Informationsfelder oder Infoboxen umfassen, also Bereiche, in denen in Textform und / oder in grafischer Form Informationen wiedergegeben werden. Informationsfelder können beispielsweise folgende Informationen umfassen:
- Kalenderinformationen, z.B. Datum, Uhrzeit, Kalendereinträge;
- Medieninformationen, z.B. Informationen zur gewählten Medienwiedergabe (Quelle (Radio, CD, Speicherkarte, Bluetooth-Gerät, etc.), Name / Frequenz eines Radiosenders, Titel / Interpret eines Musikstücks und dergleichen);
- Verkehrsinformationen, z.B. Verkehrsmeldungen;
- Navigationsinformationen, z.B. eingestellter Zielort, voraussichtliche Ankunftszeit, verbleibende Fahrtstrecke, verbleibende Fahrtdauer;
- Kommunikationsinformationen, z.B. Mobilfunkinformationen (Netzbetreiber, Signalstärke und dergleichen).

Der Erfinder hat erkannt, dass die bekannte und übliche Anordnung nichtgeografischer Elemente, insbesondere von Informationsfeldern, an festen und unveränderlichen Stellen innerhalb der Anzeigefläche dazu führen kann, dass geografische Elemente, die für den Fahrer bedeutungsvoll sein können (z.B. eine vorausliegende Fahrtroute), durch die nichtgeografischen Elemente verdeckt werden, während andere Bereiche der Anzeigefläche ungenutzt bleiben (Freiflächen). Erfindungsgemäß wird das zumindest eine nichtgeografische Element innerhalb der Anzeigefläche derart angeordnet und angezeigt, dass die Überdeckung des zumindest einen geografischen Elements durch das zumindest eine nichtgeografische Element minimiert und insbesondere vollständig vermieden wird. Mit anderen Worten wird also erfindungsgemäß darauf verzichtet, nichtgeografische Elemente, insbesondere Infoboxen, an fest vorgegebenen und unveränderlichen Stellen innerhalb der Anzeigefläche anzuzeigen. Stattdessen werden die nichtgeografischen Elemente so innerhalb der Anzeigefläche platziert, dass die Anzeige der geografischen Elemente möglichst wenig beeinträchtigt wird. Beispielsweise können hierzu Informationsfelder in den vorstehend erwähnten Freiflächen der Anzeigefläche platziert werden.

Es sei darauf hingewiesen, dass die einzelnen Schritte des erfindungsgemäßen Verfahrens und seiner Ausführungsformen nicht notwendigerweise in einer vorbestimmten Reihenfolge oder überhaupt nacheinander ausgeführt werden müssen. Vielmehr können manche Schritte zweckmäßigerweise auch gleichzeitig ausgeführt werden. Insbesondere kann vorgesehen sein, dass alle grafischen Elemente zunächst angeordnet werden, dass also zu jedem grafischen Element die Stelle der Anzeigefläche bestimmt wird, an welcher das betreffende grafische Element angezeigt werden soll. Das Ergebnis der Schritte des Anordnens der Elemente kann beispielsweise darin bestehen, dass ein Grafikspeicher mit dem anzuzeigenden Inhalt der Anzeigefläche gefüllt ist. Die Schritte des Anzeigens der grafischen Elemente können dann gleichzeitig durchgeführt werden. Es wird dann also die gesamte Darstellung, also der vollständige Inhalt der Anzeigefläche zum gleichen Zeitpunkt sichtbar.

Das erfindungsgemäße Verfahren setzt voraus, dass die grafischen Elemente zumindest zwei geografische Elemente unterschiedlicher Art umfassen. Beispiele für Arten geografischer Elemente umfassen Straßen, Fahrtrouten, Bezeichner und Objektdarstellungen. Es wird dann jedes der zumindest zwei geografischen Elemente entweder einer ersten Prioritätsklasse oder einer weiteren Prioritätsklasse zugeordnet. Hierzu werden also mindestens zwei Prioritätsklassen definiert. Es werden die zumindest zwei geografischen Elemente innerhalb der Anzeigefläche angeordnet und angezeigt. Anschließend wird das zumindest eine nichtgeografische Element innerhalb der Anzeigefläche derart angeordnet und angezeigt, dass die Überdeckung der der ersten Prioritätsklasse zugeordneten geografischen Elemente durch das zumindest eine nichtgeografische Element minimiert und insbesondere vollständig vermieden wird, während die Überdeckung aller anderen geografische Elemente zugelassen wird.

Mit anderen Worten wird also beim Anordnen und Anzeigen des zumindest einen nichtgeografischen Elements lediglich eine Überdeckung der der ersten Prioritätsklasse zugeordneten geografischen Elemente vermieden, nicht aber eine Überdeckung derjenigen geografischen Elemente, die nicht der ersten Prioritätsklasse zugeordnet sind. Auf diese Weise kann besser erreicht werden, dass nur solche geografischen Elemente nicht durch nichtgeografische Elemente verdeckt werden, die für den Fahrer eine besonders hohe Relevanz haben. Indem nur die Überdeckung dieser der ersten Prioritätsklasse zugeordneten geografischen Elemente vermieden wird, kann mit Vorteil erreicht werden, dass die nichtgeografischen Elemente mit größerer Wahrscheinlichkeit an ihrer ursprünglichen Position innerhalb der Anzeigefläche angeordnet werden können.

Besonders vorteilhaft ist es, wenn die Art der geografischen Elemente, die der ersten Prioritätsklasse zugeordnet werden, Straßen und insbesondere bereits von dem Fahrzeug befahrene, gegenwärtig von dem Fahrzeug befahrene und / oder voraussichtlich zukünftig von dem Fahrzeug befahrene Straßen umfassen. Beispielsweise kann auf diese Art bewirkt werden, dass dem Fahrer bei aktivierter Zielführung des Navigationssystems die zu befahrende Fahrtroute, insbesondere die bereits gefahrene Fahrtroute und / oder die planmäßig noch zu fahrende Fahrtroute, überdeckungsfrei angezeigt wird. Hingegen können dann andere, für den Fahrer weniger relevante geografische Elemente (z.B. Straßen, die nicht Teil der vorgesehenen Fahrtroute sind) von den nicht geografischen Elementen verdeckt werden, so dass diese mit höherer Wahrscheinlichkeit an oder nahe ihrer ursprünglichen Position innerhalb der Anzeigefläche angeordnet werden können.

In einer vorteilhaften Ausprägung können die bereits gefahrene Fahrtroute und die planmäßig noch zu fahrende Fahrtroute unterschiedlichen Prioritätsklassen zugeordnet werden. Beispielsweise kann so eine Überdeckung der bereits gefahrenen Fahrtroute durch nichtgeografische Elemente erlaubt sein, während aber die planmäßig noch zu befahrende Fahrtroute nicht überdeckt wird.

Es kann vorkommen, dass bei der Anordnung des zumindest einen nichtgeografischen Elements innerhalb der Anzeigefläche eine Überdeckung des zumindest einen geografischen Elements durch das zumindest eine nichtgeografische Element nicht vollständig vermieden werden kann. In diesem Fall kann eine vorteilhafte Weiterbildung des Verfahrens vorsehen, dass das zumindest eine nichtgeografische Element in einer zumindest teilweise transparenten Darstellung angezeigt wird. Mit anderen Worten wird dann das zumindest eine nichtgeografische Element, welches zumindest ein geografisches Element zumindest teilweise überdeckt, transparent (also durchsichtig) dargestellt, so dass das von dem nichtgeografischen Element überdeckte geografische Element trotz der Überdeckung durch das nichtgeografische Element sichtbar und somit erkennbar bleibt.

Die Erfindung wird ferner gebildet durch ein zweites Verfahren zur Anordnung und Anzeige grafischer Elemente einer Darstellung eines Fahrzeugnavigationssystems innerhalb einer Anzeigefläche, wobei die grafischen Elemente zumindest ein geografisches Element und ein nichtgeografisches Element umfassen. Dabei erfolgen in einem ersten Schritt ein Anordnen und Anzeigen des zumindest einen geografischen Elements innerhalb der Anzeigefläche und in einem zweiten Schritt ein Anordnen und Anzeigen des zumindest einen nichtgeografischen Elements innerhalb der Anzeigefläche. Das erfindungsgemäße zweite Verfahren ist dadurch gekennzeichnet, dass das zumindest eine nichtgeografische Element in einer zumindest teilweise transparenten Darstellung angezeigt wird, falls das zumindest eine nichtgeografische Element das zumindest eine geografische Element zumindest teilweise überdeckt.

Das zweite erfindungsgemäße Verfahren unterscheidet sich von dem vorbeschriebenen ersten erfindungsgemäßen Verfahren dadurch, dass bei dem zweiten Verfahren die nichtgeografischen Elemente in jedem Fall an jeweils einer vorbestimmten Position innerhalb der Anzeigefläche angeordnet werden, unabhängig davon, ob ein nichtgeografisches Element an seiner jeweiligen vorbestimmten Position ein geografisches Element überdeckt oder nicht. Dies hat den Vorteil, dass die nichtgeografischen Elemente aufgrund der Unveränderlichkeit ihrer Positionen einfacher durch den Fahrer erfasst werden können. Das Problem der möglichen Überdeckung eines geografischen Elements durch ein nichtgeografisches Element wird erfindungsgemäß dadurch gelöst, dass im Fall einer Überdeckung das zumindest eine nichtgeografische Element zumindest teilweise transparent dargestellt wird, so dass das von ihm überdeckte geografische Element trotz der Überdeckung sichtbar und somit erkennbar bleibt.

Auch bei dem zweiten erfindungsgemäßen Verfahren ist vorgesehen, dass die geografischen Elemente zumindest zwei geografische Elemente unterschiedlicher Art umfassen, wobei jedes der zumindest zwei geografischen Elemente einer ersten oder einer weiteren Prioritätsklasse zugeordnet wird. Das zumindest eine nichtgeografische Element wird in einer zumindest teilweise transparenten Darstellung nur dann angezeigt, wenn es zumindest ein der ersten Prioritätsklasse zugeordnetes geografisches Element zumindest teilweise überdeckt.

Mit besonderem Vorteil umfasst die Art der geografischen Elemente, die der ersten Prioritätsklasse zugeordnet werden, Straßen und insbesondere bereits von dem Fahrzeug befahrene, gegenwärtig von dem Fahrzeug befahrene und / oder voraussichtlich zukünftig von dem Fahrzeug befahrene Straßen. Es wird hierzu auf die vorstehend gemachten Ausführungen zum ersten erfindungsgemäßen Verfahren verwiesen.

Die Erfindung besteht überdies in einem Fahrzeugnavigationssystem mit einer Anzeigefläche zur Anzeige grafischer Elemente, wobei das Fahrzeugnavigationssystem zur Durchführung eines der vorbeschriebenen Verfahren eingerichtet ist, sowie in einem Fahrzeug, insbesondere einem Kraftfahrzeug, mit einem solchen Fahrzeugnavigationssystem.

Weitere Ausführungsformen der Erfindung werden nachfolgend anhand beispielhafter Darstellungen erläutert. Es zeigen
- Fig. 1: eine Anzeigefläche eines Fahrzeugnavigationssystems mit einer Darstellung grafischer Elemente gemäß dem Stand der Technik,
- Fig. 2: eine Anzeigefläche eines Fahrzeugnavigationssystems mit einer Darstellung grafischer Elemente gemäß einer Ausführungsform des ersten erfindungsgemäßen Verfahrens,
- Fig. 3: eine Anzeigefläche eines Fahrzeugnavigationssystems mit einer Darstellung grafischer Elemente gemäß einer Ausführungsform des zweiten erfindungsgemäßen Verfahrens,
- Fig. 4: ein Ablaufdiagramm einer Ausführungsform des ersten erfindungsgemäßen Verfahrens und
- Fig. 5: ein Ablaufdiagramm einer Ausführungsform des zweiten erfindungsgemäßen Verfahrens.

Gleiche Bezugszeichen kennzeichnen in den Figuren gleiche Merkmale der dargestellten Ausführungsformen der Erfindung. Es wird darauf hingewiesen, dass es sich bei den dargestellten Figuren sowie der zugehörigen Beschreibung lediglich um Ausführungsbeispiele der Erfindung handelt. Insbesondere sind Darstellungen von Merkmalskombinationen in den Figuren und / oder der Figurenbeschreibung nicht dahingehend auszulegen, dass die Erfindung zwingend die Verwirklichung aller genannten Merkmale erfordert. Andere Ausführungsformen der Erfindung können weniger, mehr und / oder andere Merkmale enthalten. Der Schutzbereich und die Offenbarung der Erfindung ergeben sich aus den beiliegenden Patentansprüchen und der vollständigen Beschreibung. Es wird zudem darauf hingewiesen, dass es sich bei den Darstellungen um Prinzipdarstellungen von Ausführungsformen der Erfindung handelt. Die Anordnung der einzelnen dargestellten Elemente zueinander ist nur beispielhaft gewählt und kann bei anderen Ausführungsformen der Erfindung anders gewählt werden.

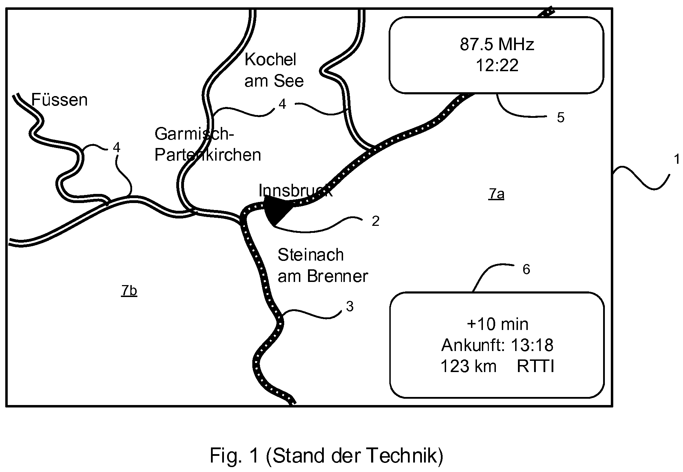

Auf der in Fig. 1 gezeigten Anzeigefläche 1 eines Fahrzeugnavigationssystems gemäß dem Stand der Technik ist die Darstellung verschiedener grafischer Elemente 2, 3, 4, 5, 6 erkennbar. Die Darstellung umfasst eine zweidimensionale Kartendarstellung der Umgebung des eigenen Kraftfahrzeugs (Egofahrzeug). Die Kartendarstellung umfasst Straßen 4. Im dargestellten Beispiel ist die Zielführung des Fahrzeugnavigationssystems aktiviert und die von dem Egofahrzeug in der Vergangenheit und gemäß der eingestellten Zielführung planmäßig zukünftig befahrene Fahrtroute 3 ist grafisch hervorgehoben. Mit einem annähernd dreieckförmigen Symbol 2 ist die Position und Fahrtrichtung des Egofahrzeugs dargestellt. Die Kartendarstellung umfasst ferner Ortsnamen (nicht mit Bezugszeichen versehen) zu ausgewählten Orten innerhalb des Kartenausschnitts. Ferner sind auf der Anzeigefläche 1 zwei nichtgeografische Elemente dargestellt, nämlich die Informationsfelder 5, 6. In dem Informationsfeld 5 sind eine Frequenz eines momentan eingestellten Radiosenders sowie eine gegenwärtige Uhrzeit dargestellt. In dem Informationsfeld 6 sind Informationen zu der gegenwärtigen Zielführung des Fahrzeugnavigationssystems dargestellt, nämlich (von oben nach unten) eine Zeitangabe einer durch die aktuelle Verkehrslage bedingten Fahrtzeitverlängerung, eine voraussichtliche Ankunftszeit, eine Länge der verbleibenden Fahrtstrecke sowie eine Information, dass Informationen zur gegenwärtigen Verkehrslage von dem Fahrzeugnavigationssystem empfangen werden (Real-Time Traffic Information = "RTTI").

Es ist in der Darstellung der Fig. 1 gut erkennbar, dass das Informationsfeld 5 die Fahrtroute 3 teilweise überdeckt. Der Fahrer kann somit nur eingeschränkt den Verlauf der eingestellten Fahrtroute innerhalb des dargestellten Kartenausschnitts erkennen. Zugleich bestehen aber innerhalb der Anzeigefläche 1 Freiflächen 7a, 7b, in denen keine grafischen Elemente angezeigt werden.

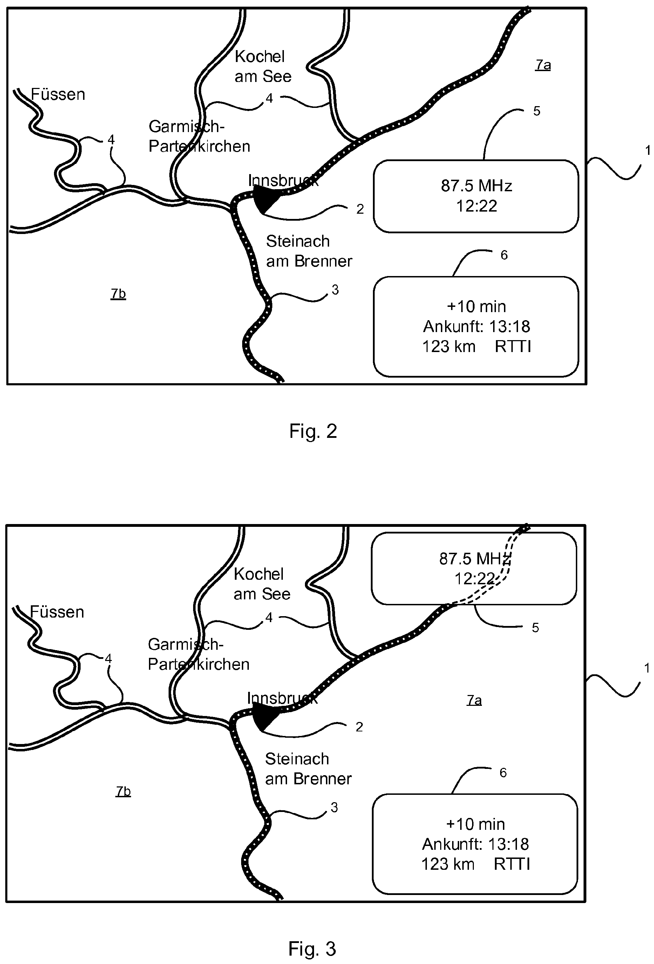

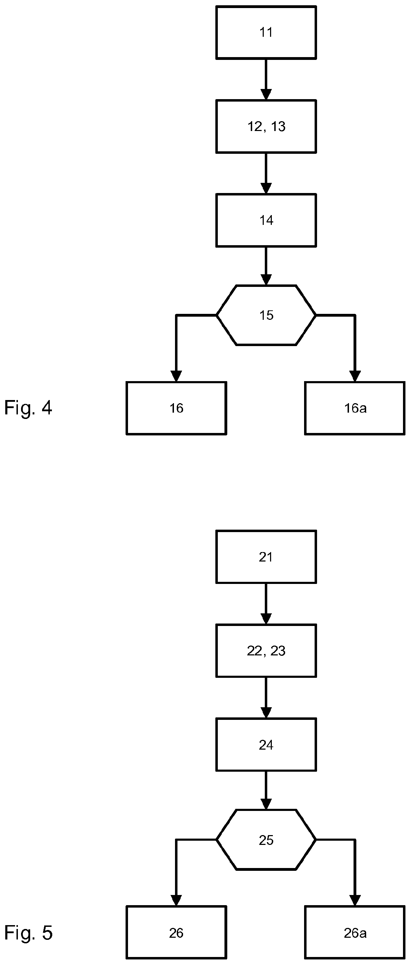

Eine Ausführungsform des ersten erfindungsgemäßen Verfahrens soll anhand des in Fig. 4 gezeigten Ablaufdiagramms näher erläutert werden. Die aus der Ausführung des in Fig. 4 dargestellten Verfahrens resultierende Darstellung ist in Fig. 2 gezeigt. Zunächst werden in Schritt 11 die geografischen Elemente 2, 3, 4 jeweils einer Prioritätsklasse zugeordnet. Dabei werden die im Rahmen der aktivierten Zielführung berechnete Fahrtroute 3 sowie das Fahrzeugsymbol 2 einer ersten Prioritätsklasse und alle weiteren geografischen Elemente (Straßen 4 und Ortsnamen) einer weiteren Prioritätsklasse zugeordnet. Mit anderen Worten ist bei dem ersten erfindungsgemäßen Verfahren also vorgesehen, dass nur die Überdeckung des Fahrzeugsymbols 2 und der Fahrtroute 3 durch nichtgeografische Elemente vermieden wird, wohingegen die Überdeckung aller anderen geografischen Elemente zugelassen wird.

Anschließend werden in den Schritten 12 und 13 die geografischen Elemente 2, 3, 4 innerhalb der Anzeigefläche 1 angeordnet 12 und angezeigt 13. Es sei erneut darauf hingewiesen, dass die Abfolge der Verfahrensschritte 12, 13, 14, 15, 16, 16a nicht zwangsläufig sequenziell erfolgen muss. Beispielsweise können zunächst alle grafischen Elemente angeordnet 12, 14 werden, dann eine datentechnische Repräsentation der grafischen Elemente in einen Grafikspeicher des Fahrzeugnavigationssystems gespeichert werden und zuletzt der Inhalt des Grafikspeichers auf der Anzeigefläche 1 dargestellt 13, 16, 16a werden.

In Schritt 14 werden die Informationsfelder 5, 6 derart innerhalb der Anzeigefläche 1 angeordnet, dass die Überdeckung der der ersten Prioritätsklasse zugeordneten geografischen Elemente (also der Route 3 und des Fahrzeugsymbols 2) minimiert und insbesondere vollständig vermieden wird. Es kann vorgesehen sein, dass die Informationsfelder 5, 6 bevorzugt an ihren jeweiligen ursprünglich vorgesehen Positionen angeordnet werden. Im vorliegenden Beispiel können dies die Positionen sein, die die Informationsfelder 5, 6 in der in Fig. 1 gezeigten Darstellung einnehmen. Ein Vergleich der Figuren 1 und 2 zeigt, dass das Informationsfeld 6 an seiner ursprünglich vorgesehen Position (rechts unten auf der Anzeigefläche 1) angeordnet werden kann, da es dort keine geografischen Elemente verdeckt. Hingegen muss in Schritt 14 das Informationsfeld 5 an einer anderen Position als der in Fig. 1 dargestellten ursprünglich vorgesehenen Position (rechts oben auf der Anzeigefläche 1) angeordnet werden, da es dort die Route 3 teilweise überdecken würde. Zur Anordnung des Informationsfelds 5 können die bestehenden Freiflächen 7a, 7b genutzt werden. Wie in Fig. 2 erkennbar ist, besteht zumindest eine Möglichkeit, das Informationsfeld 5 derart anzuordnen, dass eine Überdeckung der geografischen Elemente 2, 3, 4 durch das Informationsfeld 5 vollständig vermieden wird. Die Anordnung an dieser in Fig. 2 dargestellten Position ist das Ergebnis von Schritt 14.

In Schritt 15 wird die Bedingung geprüft, ob die Anordnung der nichtgeografischen Elemente 5, 6 innerhalb der Anzeigefläche 1 derart erfolgt ist, dass die Überdeckung zumindest der der ersten Prioritätsklasse zugeordneten geografischen Elemente 2, 3 durch die nichtgeografischen Elemente 5, 6 vollständig vermieden werden konnte.

In der in Fig. 2 gezeigten Darstellung ist erkennbar, dass das Informationsfeld 5 innerhalb der Anzeigefläche 1 derart angeordnet werden konnte, dass eine Überdeckung der Fahrtroute 3 vollständig vermieden wurde. Ein Vergleich der Figuren 1 und 2 zeigt, dass die Überdeckung der Fahrtroute 3 durch das Informationsfeld 5 vermeidbar ist, in dem das Informationsfeld 5 entsprechend innerhalb der vorhandenen Freifläche 7a angeordnet wird. Im vorliegenden Beispiel ergibt die in Schritt 15 vorgenommene Prüfung somit, dass alle nichtgeografischen Elemente 5, 6 innerhalb der Anzeigefläche 1 derart angeordnet werden konnten, dass keine geografischen Elemente 2, 3, 4 überdeckt werden. In diesem Beispiel endet die Ausführung des Verfahrens daher mit Schritt 16, in dem die nichtgeografischen Elemente 5, 6 angezeigt werden.

Wäre hingegen das Ergebnis der in Schritt 15 vorgenommenen Prüfung derart ausgefallen, dass zumindest eines der der ersten Prioritätsklasse zugeordneten geografischen Elemente 2, 3 zumindest teilweise durch zumindest eines der nichtgeografischen Elemente 5, 6 überdeckt worden wäre, so wäre das Verfahren mit Schritt 16a fortgesetzt worden, bei welchem das zumindest eine die Überdeckung verursachende nichtgeografische Element in einer zumindest teilweise transparenten Darstellung angezeigt würde.

Eine Ausführungsform des zweiten erfindungsgemäßen Verfahrens soll anhand des in Fig. 5 gezeigten Ablaufdiagramms näher erläutert werden. Die aus der Ausführung des in Fig. 5 dargestellten Verfahrens resultierende Darstellung ist in Fig. 3 gezeigt. Zunächst werden in Schritt 21 die geografischen Elemente 2, 3, 4 jeweils einer Prioritätsklasse zugeordnet. Dabei werden die im Rahmen der aktivierten Zielführung berechnete Fahrtroute 3 sowie das Fahrzeugsymbol 2 einer ersten Prioritätsklasse und alle weiteren geografischen Elemente (Straßen 4 und Ortsnamen) einer weiteren Prioritätsklasse zugeordnet. Mit anderen Worten ist bei dem zweiten erfindungsgemäßen Verfahren also vorgesehen, dass nur die Überdeckung des Fahrzeugsymbols 2 und der Fahrtroute 3 durch nichtgeografische Elemente vermieden wird, wohingegen die Überdeckung aller anderen geografischen Elemente zugelassen wird.

Anschließend werden in den Schritten 22 und 23 die geografischen Elemente 2, 3, 4 innerhalb der Anzeigefläche 1 angeordnet 22 und angezeigt 23. Zur Abfolge der Verfahrensschritte 22, 23, 24, 25, 26, 26a sei auf die vorstehenden Anmerkungen verwiesen, die hier ebenfalls zutreffen. Im Unterschied zu dem in Fig. 4 dargestellten Verfahrensablauf gemäß dem ersten erfindungsgemäßen Verfahren ist bei dem in Fig. 5 dargestellten Verfahrensablauf gemäß dem zweiten erfindungsgemäßen Verfahren nicht vorgesehen, die nichtgeografischen Elemente 5, 6 bei einer möglichen Überdeckung an einer anderen Position innerhalb der Anzeigefläche 1 (etwa innerhalb der Freiflächen 7a, 7b) anzuordnen. Im Vergleich der Figuren 1 und 3 ist somit erkennbar, dass das Informationsfeld 5 an derselben Position angeordnet wurde (Schritt 24), obwohl es die Fahrtroute 3 überdeckt.

In Schritt 25 wird die Bedingung geprüft, ob die in Schritt 24 erfolgte Anordnung der nichtgeografischen Elemente 5, 6 innerhalb der Anzeigefläche 1 derart erfolgt ist, dass die Überdeckung zumindest der der ersten Prioritätsklasse zugeordneten geografischen Elemente 2, 3 durch die nichtgeografischen Elemente 5, 6 vollständig vermieden werden konnte.

In der in Fig. 3 gezeigten Darstellung ist erkennbar, dass das Informationsfeld 5 innerhalb der Anzeigefläche 1 derart angeordnet wurde, dass es die Fahrtroute 3 teilweise überdeckt. Das Informationsfeld 6 überdeckt hingegen kein geografisches Element. Die in Schritt 25 vorgenommene Prüfung ergibt somit bezüglich der Elemente 5, 6 unterschiedliche Ergebnisse. In diesem Beispiel wird das Verfahren daher bezüglich des Elements 6 mit Schritt 26 und bezüglich des Elements 5 mit Schritt 26a fortgesetzt.

In Schritt 26 wird das Informationsfeld 6 in einer regulären Darstellung angezeigt.

In Schritt 26a wird das Informationsfeld 5 in einer zumindest teilweise transparenten Darstellung angezeigt, so dass die von dem Informationsfeld 5 überdeckte Route 3 weiterhin erkennbar bleibt. Dies ist in Fig. 3 dadurch symbolisch veranschaulicht, dass die von dem Element 5 überdeckte Route 3 gestrichelt gezeichnet ist.

### Bezugszeichenliste

- 1: Anzeigefläche
- 2: Kraftfahrzeug (Darstellung)
- 3: Straße als Fahrtroute (Darstellung)
- 4: Straße (Darstellung)
- 5, 6: Informationsfelder
- 7a, 7b: Freiflächen
- 11-26a: Verfahrensschritte

## Patentansprüche

1. Verfahren zur Anordnung und Anzeige grafischer Elemente (2, 3, 4, 5, 6) einer Darstellung eines Fahrzeugnavigationssystems innerhalb einer Anzeigefläche (1), wobei die grafischen Elemente (2, 3, 4, 5, 6) zumindest ein geografisches Element (2, 3, 4) und ein nichtgeografisches Element (5, 6) umfassen, wobei die grafischen Elemente (2, 3, 4, 5, 6) zumindest zwei geografische Elemente (2, 3, 4) unterschiedlicher Art umfassen, mit den Schritten
- Zuordnen (11) jedes der zumindest zwei geografischen Elemente (2, 3, 4) zu entweder einer ersten Prioritätsklasse oder einer weiteren Prioritätsklasse,
- Anordnen (12) und Anzeigen (13) der zumindest zwei geografischen Elemente (2, 3, 4) innerhalb der Anzeigefläche (1) und
- Anordnen (14) und Anzeigen (16, 16a) des zumindest einen nichtgeografischen Elements (5, 6) innerhalb der Anzeigefläche (1) derart, dass die Überdeckung der der ersten Prioritätsklasse zugeordneten geografischen Elemente (2, 3) durch das zumindest eine nichtgeografische Element (5, 6) minimiert und insbesondere vollständig vermieden wird, während die Überdeckung aller anderen geografischen Elemente (4) zugelassen wird.

2. Verfahren nach Anspruch 1, wobei die Art der geografischen Elemente (2, 3, 4), die der ersten Prioritätsklasse zugeordnet (11) werden, Straßen (3, 4) und insbesondere bereits von dem Fahrzeug befahrene, gegenwärtig von dem Fahrzeug befahrene und / oder voraussichtlich zukünftig von dem Fahrzeug befahrene Straßen (3) umfasst.

3. Verfahren nach einem der vorhergehenden Ansprüche, mit dem unter der Bedingung (15), dass die Anordnung (14) des zumindest einen nichtgeografischen Elements (5, 6) innerhalb der Anzeigefläche (1) derart erfolgt ist, dass die Überdeckung des zumindest einen geografischen Elements (2, 3, 4) durch das zumindest eine nichtgeografische Element (5, 6) nicht vollständig vermieden wird, ausgeführten Schritt
- Anzeigen (16a) des zumindest einen nichtgeografischen Elements (5) in einer zumindest teilweise transparenten Darstellung.

4. Verfahren zur Anordnung und Anzeige grafischer Elemente (2, 3, 4, 5, 6) einer Darstellung eines Fahrzeugnavigationssystems innerhalb einer Anzeigefläche (1), wobei die grafischen Elemente (2, 3, 4, 5, 6) zumindest zwei geografische Elemente (2, 3, 4) unterschiedlicher Art und ein nichtgeografisches Element (5, 6) umfassen, mit den Schritten
- Zuordnen (21) jedes der zumindest zwei geografischen Elemente (2, 3, 4) zu entweder einer ersten Prioritätsklasse oder einer weiteren Prioritätsklasse,
- Anordnen (22) und Anzeigen (23) der zumindest zwei geografischen Elemente (2, 3, 4) innerhalb der Anzeigefläche (1) und
- Anordnen (24) und Anzeigen (26, 26a) des zumindest einen nichtgeografischen Elements (5, 6) innerhalb der Anzeigefläche (1),
wobei das zumindest eine nichtgeografische Element (5, 6) in einer zumindest teilweise transparenten Darstellung angezeigt (26a) wird, falls (25) das zumindest eine nichtgeografische Element (5) zumindest ein der ersten Prioritätsklasse zugeordnetes geografisches Element (3) zumindest teilweise überdeckt, wobei eine Überdeckung eines der ersten Prioritätsklasse zugeordneten geografischen Elements (5, 6) vermieden wird, und eine Überdeckung aller anderer geografischen Elemente (4) zugelassen wird.

5. Verfahren nach Anspruch 4, wobei die Art der geografischen Elemente (2, 3, 4), die der ersten Prioritätsklasse zugeordnet (21) werden, Straßen (3, 4) und insbesondere bereits von dem Fahrzeug befahrene, gegenwärtig von dem Fahrzeug befahrene und / oder voraussichtlich zukünftig von dem Fahrzeug befahrene Straßen (3) umfasst.

6. Fahrzeugnavigationssystem mit einer Anzeigefläche (1) zur Anzeige grafischer Elemente (2, 3, 4, 5, 6), wobei das Fahrzeugnavigationssystem zur Durchführung des Verfahrens nach einem der vorhergehenden Ansprüche eingerichtet ist.

7. Fahrzeug, insbesondere Kraftfahrzeug, mit einem Fahrzeugnavigationssystem nach Anspruch 6.

## Claims

1. Method for arranging and displaying graphical elements (2, 3, 4, 5, 6) of a representation of a vehicle navigation system within a display panel (1), wherein the graphical elements (2, 3, 4, 5, 6) comprise at least one geographical element (2, 3, 4) and one nongeographical element (5, 6), the graphical elements (2, 3, 4, 5, 6) comprising at least two geographical elements (2, 3, 4) of different type, having the steps of
- assigning (11) each of the at least two geographical elements (2, 3, 4) to either a first priority class or a further priority class,
- arranging (12) and displaying (13) the at least two geographical elements (2, 3, 4) within the display panel (1) and
- arranging (14) and displaying (16, 16a) the at least one nongeographical element (5, 6) within the display panel (1) such that the masking of the geographical elements (2, 3) assigned to the first priority class by the at least one nongeographical element (5, 6) is minimized and in particular avoided completely, while the masking of all other geographical elements (4) is permitted.

2. Method according to Claim 1, wherein the type of geographical elements (2, 3, 4) assigned (11) to the first priority class comprises roads (3, 4) and in particular roads (3) that have already been travelled on by the vehicle, are being travelled on by the vehicle at present and/or will probably be travelled on by the vehicle in the future.

3. Method according to either of the preceding claims, having the step, performed under the circumstance (15) that the arrangement (14) of the at least one nongeographical element (5, 6) within the display panel (1) occurs such that the masking of the at least one geographical element (2, 3, 4) by the at least one nongeographical element (5, 6) is not avoided completely, of
- displaying (16a) the at least one nongeographical element (5) in an at least partly transparent representation.

4. Method for arranging and displaying graphical elements (2, 3, 4, 5, 6) of a representation of a vehicle navigation system within a display panel (1), wherein the graphical elements (2, 3, 4, 5, 6) comprise at least two geographical elements (2, 3, 4) of different type and one nongeographical element (5, 6), having the steps of
- assigning (21) each of the at least two geographical elements (2, 3, 4) to either a first priority class or a further priority class,
- arranging (22) and displaying (23) the at least two geographical elements (2, 3, 4) within the display panel (1) and
- arranging (24) and displaying (26, 26a) the at least one nongeographical element (5, 6) within the display panel (1),
wherein the at least one nongeographical element (5, 6) is displayed (26a) in an at least partly transparent representation if (25) the at least one nongeographical element (5) masks at least one geographical element (3) assigned to the first priority class at least partly, masking of a geographical element (5, 6) assigned to the first priority class being avoided, and masking of all other geographical elements (4) being permitted.

5. Method according to Claim 4, wherein the type of geographical elements (2, 3, 4) assigned (21) to the first priority class comprises roads (3, 4) and in particular roads (3) that have already been travelled on by the vehicle, are being travelled on by the vehicle at present and/or will probably be travelled on by the vehicle in the future.

6. Vehicle navigation system having a display panel (1) for displaying graphical elements (2, 3, 4, 5, 6), wherein the vehicle navigation system is set up to perform the method according to one of the preceding claims.

7. Vehicle, in particular a motor vehicle, having a vehicle navigation system according to Claim 6.

## Revendications

1. Procédé permettant d'agencer et d'afficher des éléments graphiques (2, 3, 4, 5, 6) d'une représentation d'un système de navigation de véhicule à l'intérieur d'une surface d'affichage (1), les éléments graphiques (2, 3, 4, 5, 6) comprenant au moins un élément géographique (2, 3, 4) et un élément non géographique (5, 6), les éléments graphiques (2, 3, 4, 5, 6) comprenant au moins deux éléments géographiques (2, 3, 4) de différents types, comprenant les étapes consistant à
- affecter (11) chacun des au moins deux éléments géographiques (2, 3, 4) soit à une première classe de priorité, soit à une classe de priorité supplémentaire,
- agencer (12) et afficher (13) les au moins deux éléments géographiques (2, 3, 4) à l'intérieur de la surface d'affichage (1), et
- agencer (14) et afficher (16, 16a) ledit au moins un élément non géographique (5, 6) à l'intérieur de la surface d'affichage (1) de telle sorte que le recouvrement des éléments géographiques (2, 3) affectés à la première classe de priorité par ledit au moins un élément non géographique (5, 6) soit minimisé, et en particulier complètement évité, alors que le recouvrement de tous les autres éléments géographiques (4) est autorisé.

2. Procédé selon la revendication 1, dans lequel le type des éléments géographiques (2, 3, 4) qui sont affectés à la première classe de priorité (11) comprend des routes (3, 4) et en particulier des routes (3) déjà parcourues par le véhicule, actuellement parcourues par le véhicule et/ou probablement à parcourir par le véhicule.

3. Procédé selon l'une quelconque des revendications précédentes, comprenant l'étape exécutée sous la condition (15) que l'agencement (14) du au moins un élément non géographique (5, 6) à l'intérieur de la surface d'affichage (1) ait été effectué de telle sorte que le recouvrement du au moins un élément géographique (2, 3, 4) par ledit au moins un élément non géographique (5, 6) ne soit pas complètement évité, consistant à
- afficher (16a) ledit au moins un élément non géographique (5) en une représentation au moins partiellement transparente.

4. Procédé permettant d'agencer et d'afficher des éléments graphiques (2, 3, 4, 5, 6) d'une représentation d'un système de navigation de véhicule à l'intérieur d'une surface d'affichage (1), les éléments graphiques (2, 3, 4, 5, 6) comprenant au moins deux éléments géographiques (2, 3, 4) de différents types et un élément non géographique (5, 6), comprenant les étapes consistant à
- affecter (21) chacun des au moins deux éléments géographiques (2, 3, 4) soit à une première classe de priorité, soit à une classe de priorité supplémentaire,
- agencer (22) et afficher (23) les au moins deux éléments géographiques (2, 3, 4) à l'intérieur de la surface d'affichage (1), et
- agencer (24) et afficher (26, 26a) ledit au moins un élément non géographique (5, 6) à l'intérieur de la surface d'affichage (1),
ledit au moins un élément non géographique (5, 6) étant affiché (26a) en une représentation au moins partiellement transparente, si (25) ledit au moins un élément non géographique (5) recouvre au moins partiellement au moins un élément géographique (3) affecté à la première classe de priorité, un recouvrement d'un élément géographique (5, 6) affecté à la première classe de priorité étant évité, et un recouvrement de tous les autres éléments géographiques (4) étant autorisé.

5. Procédé selon la revendication 4, dans lequel le type des éléments géographiques (2, 3, 4) qui sont affectés (21) à la première classe de priorité comprend des routes (3, 4) et en particulier des routes (3) déjà parcourues par le véhicule, actuellement parcourues par le véhicule et/ou probablement à parcourir par le véhicule.

6. Système de navigation de véhicule, comprenant une surface d'affichage (1) permettant d'afficher des éléments graphiques (2, 3, 4, 5, 6), le système de navigation de véhicule étant conçu pour exécuter le procédé selon l'une quelconque des revendications précédentes.

7. Véhicule, en particulier véhicule automobile, comprenant un système de navigation de véhicule selon la revendication 6.
